# EUROPÄISCHE PATENTSCHRIFT

(11) **EP 1 167 780 B1**
(45) Veröffentlichungstag und Bekanntmachung des Hinweises auf die Patenterteilung: **07.10.2009**
(21) Anmeldenummer: 01115451.5
(22) Anmeldetag: 27.06.2001
(51) Int. Cl.: F16B 19/04, F16B 19/08, F16B 19/06, B21K 1/60, B21H 7/00

(54) **Niet**
Rivet
Rivet

(30) Priorität: 28.06.2000 DE 10031492
(43) Veröffentlichungstag der Anmeldung: 02.01.2002
(73) Patentinhaber: Schmitz, Hans-Gert, 42499 Hückeswagen (DE); Kirsch, Jürgen, 42499 Hückeswagen (DE)
(72) Erfinder: Schmitz, Hans-Gert, 42499 Hückeswagen (DE); Kirsch, Jürgen, 42499 Hückeswagen (DE)
(74) Vertreter: Müller, Enno

(56) Entgegenhaltungen:
- EP-A- 0 833 063
- EP-A- 0 888 837
- WO-A-98/31487
- WO-A-99/49227
- US-A- 2 196 144

## Beschreibung

Die Erfindung betrifft einen, vorzugsweise im Walzverfahren hergestellten Niet nach den Merkmalen des Oberbegriffes des Anspruches 1.

Derartige Niete sind bereits in verschiedenen Ausführungsformen bekannt geworden. Zum Stand der Technik wird beispielsweise auf die EP 0 888 837 verwiesen.

Zu Nieten allgemein wird auch auf die US 2 196 144, die EP 0 888 837 A2 und die WO 98/31487 verwiesen.

Die Erfindung beschäftigt sich mit der Aufgabe, einen Niet anzugeben, der bei rationeller Herstellbarkeit einfach und sicher zu verarbeiten ist.

Diese Aufgabe ist beim Gegenstand des Anspruches 1 gelöst, wobei darauf abgestellt ist, dass der Nietschaft hinsichtlich seines Querschnitts bezüglich der äußeren Konturlinie eine Bauchigkeit ergebende Anflachungen aufweist ohne Wendepunkt in der Konturlinie. Die äußere Querschnitts-Kontur dieses Nietschaft in einem Querschnitt rechtwinklig zu einer Längsachse des Niets ist mithin von der Kreisform abweichend gerundet, jedoch derart, dass stets eine Krümmung nach innen gegeben ist. Bauchigkeit bedeutet hierbei auch, dass vergleichsweise große Ausprägungen vorgesehen sind.

Weiter auf Seite 2 der ursprünglich eingereichten Unterlagen gemäß Anlage.

Der Nietkopf muss, wie nachstehend noch in Bezug auch auf Beispiele im Einzelnen beschrieben, nicht notwendig vorhanden sein im Sinne eines gesondert ausgestalteten Kopfes. Vielmehr kann der Niet auch fuß- und kopfseitig gleichförmig, also auch ohne vorstehenden Kopfbereich, ausgebildet sein.

Von Bedeutung ist auch, dass der Nietschaft als Hohlschaft ausgebildet sein kann. Der Hohlschaft kann in gleicher Weise eine unrunde Innenkontur aufweisen, wie sie bezüglich der Außenkontur des Nietschaftes bereits beschrieben ist. Insbesondere kann der Hohlschaft hinsichtlich seines Querschnittes eine Innenkontur aufweisen, die ohne Wendepunkt in der Konturlinie eine eine Bauchigkeit ergebende Abflachungen aufweist.

In gleicher Weise kann eine freie Fläche des Innenquerschnitts eine eine Wellenform ergebende Einbuchtungen aufweisen, wobei symmetrisch über den Umfang verteilt eine kleine Anzahl von Wellenbergen, bspw. drei bis fünf Wellenberge, und eine entsprechende Anzahl von Wellentälern ausgebildet sind. Ein Wellenberg kann, bezogen auf einen mittleren Radius der Innenkonturlinie, eine wesentliche Erhebung von mehr als ein Zehntel des Radius aufweisen. Hinsichtlich der beschriebenen Wellenkonturen an der inneren und äußeren Konturlinie des Hohlschaftes ist es auch möglich und in Einzelfällen bevorzugt, gleichsam eine Phasenversetzung vorzusehen. Hierbei entspricht ein Wellenberg im Inneren des Hohlschaftes - wenn auch Wellenberge in der Außenkontur des Hohlschaftes vorgesehen sind - in seiner örtlichen Lage nicht einen Wellenberg in der äußeren Kontur, sondern bspw. einem Wellental. Dies bedeutet, dass auch der verbleibende Ringquerschnitt des Hohlschaftes Bereiche größerer und kleinerer Wandstärke aufweist.

Weiter ist auch bevorzugt, insbesondere bei Stanznieten, dass der Nietschaft an seinem stirnseitigen, dem Nietkopf abgewandten Ende, eine in Längsrichtung profilierte Kontur aufweist. Es stehen gleichsam Zacken, jedoch in gerundeter Form, vor, die ein leichteres Einstechen ermöglichen. Dies insbesondere auch bei Nieten mit Hohlschaft. In allgemeinerer Beschreibung ist die stirnseitige Endfläche des Nietes konkav ausgebildet. In Bezug auf die weiter oben bereits angeführte Ausgestaltung, dass der Niet keinen eigentlichen Nietkopf besitzt, ist in einem solchen Fall der Niet beidseitig, an beiden stirnseitigen Endflächen, in dieser Weise konkav oder mit in Längsrichtung profilierter Kontur etc. ausgebildet.

Diese Profilierung kann insbesondere wellenartig ausgebildet sein.

Von Bedeutung ist auch, dass die hier beschriebenen Niete nahe ihrem dem Nietkopf abgewandten Endbereich (oder ggf. eben an beiden Endbereichen) in einer Ebene senkrecht zur Längsachse des Nietes umlaufende Rillen aufweisen können. Dies können auch mehrere Rillen untereinander sein, wobei ein Längsquerschnitt durch den Niet insofern eine Sägezahnstruktur ergeben kann, wobei die Sägezahn-Täler jeweils ein Querschnittsbereich einer solchen umlaufenen Nut sind.

Nachstehend ist die Erfindung des Weiteren anhand beigefügter Zeichnung, die jedoch lediglich Ausführungsbeispiele darstellt, erläutert. Hierbei zeigt:
- Fig. 1: eine Längs-Querschnittsansicht einer ersten Ausführungsform des Niets;
- Fig.. 2: einen Schnitt durch den Gegenstand gemäß Fig. 1, geschnitten entlang der Linie II-II;
- Fig. 3: einen Längs-Querschnitt durch einen Niet in alternativer Ausführungsform;
- Fig. 4: einen Schnitt durch den Gegenstand gemäß Fig. 3, geschnitten entlang der Linie IV-IV.

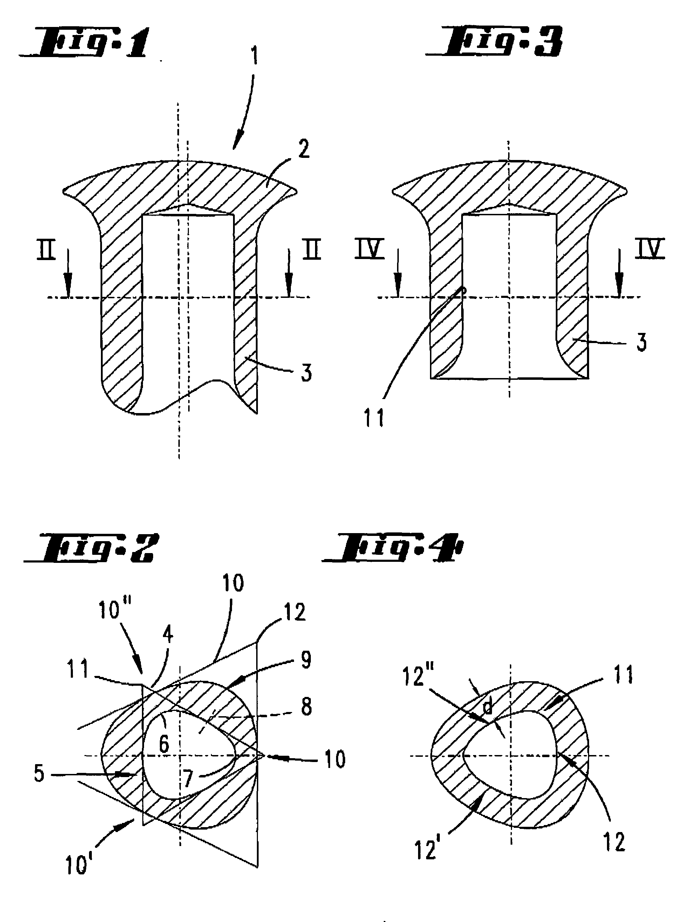

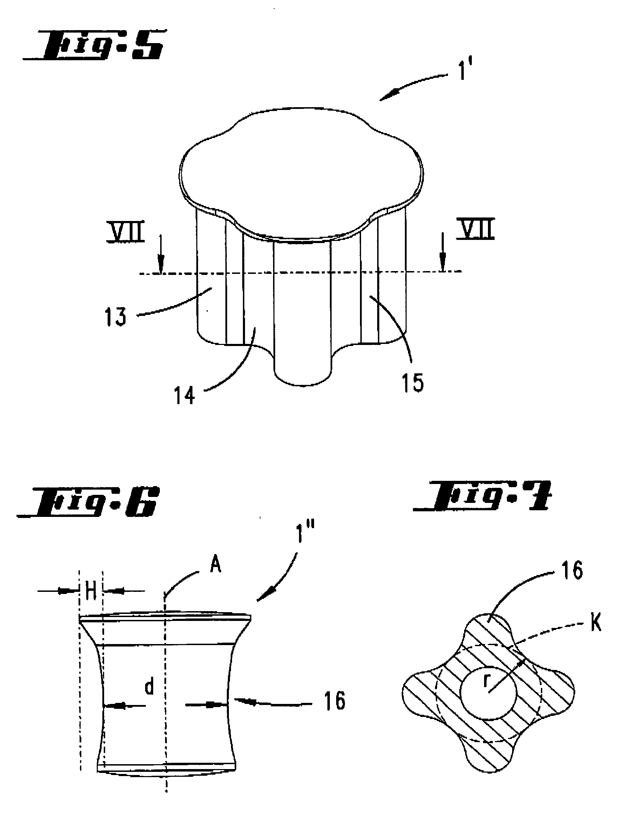

Dargestellt und beschrieben ist zunächst mit Bezug zu Fig. 1 ein Niet 1 mit einem Nietkopf 2 und einem Nietschaft 3. Der Nietkopf 2 ist ist seitlich rundum überstehend bezüglich des Nietschafts 3 ausgeformt.

Der Nietschaft 3 ist als Hohlschaft aufgebildet und besitzt innenseitig, wie insbesondere der Fig. 2 zu entnehmen, einen unrunden Querschnitt (Querschnitt senkrecht zur Längsachse des Niets).

Im Einzelnen handelt es sich bei dem unrunden Innenquerschnitt des Nietschaftes 3 um einen gerundet dreiecksförmigen Querschnitt.

Würde man tangentiale Linien 4 an die gerundete Kontur 5 des Innenquerschnittes, tangential mittig zwischen zwei "Bäuchen" 6, 7, wie mit der Linie 8 angedeutet, anlegen, würden sich drei Linien 4 ergeben, die sich zu einer Dreiecksform, wie dargestellt, ergänzen.

Das Gleiche kann bezüglich der Außenkontur 9 vorgenommen werden, wie durch die Linien 10 angedeutet. Es erweist sich, dass die Dreiecksspitzen 11, 12 zueinander versetzt sind. Hier kann von "Phasenversatz" gesprochen werden.

Die Innen- bzw. Außenkontur der Nietschäfte 3 der Ausführungsformen der Fig. 1 bis 4 lässt sich auch dahingehend charakterisieren, dass der Nietschaft 3 hinsichtlich seines Querschnittes bezüglich der äußeren Konturlinie eine Bauchigkeit ergebende Abflachungen 10, 10', 10" aufweist, wobei die äußere Konturlinie ohne Wendepunkt, d. h. mit einer stetigen, jedoch wechselnden Krümmung, ausgebildet ist.

Beim Ausführungsbeispiel weist die Außenkonturlinie drei Bäuche und drei Abflachungen 10, 10', 10" auf.

Auch bezüglich der Innenkontur 5 bzw. 11, vgl. etwa Fig. 3 und 4, kann, vom Mittelpunkt aus betrachtet, eine Charakterisierung dahingehend vorgenommen werden, dass eine Bauchigkeit ergebende Abflachungen 12, 12', 12" ausgebildet ist, gleichfalls ohne Wendepunkt, jedoch mit unterschiedlicher Krümmung, in der insgesamt gerundeten Konturlinie 11.

Wie weiter ein Vergleich der Fig. 2 und 4 zeigt, kann die Innenkonturlinie phasengleich mit einer entsprechenden, eine Bauchigkeit aufweisenden Außenkonturlinie aber auch phasenversetzt, beim Ausführungsbeispiel der Fig. 2 um 45° versetzt zu der Außenkonturlinie, ausgebildet sein.

Hinsichtlich der Ausführungsform der Figuren 3 und 4 weist der Nietschaft 3 über den Umfang jeweils eine gleichbleibende Wandstärke d auf, während die Wandstärke d bei einem Niet gemäß den Fig. 1 und 2 über den Umfang sich kontinuierlich ändert.

## Patentansprüche

1. Niet (1,1',1'') Vorzugsweise im Walzverfahren hergestellt mit einem Nietkopf (2) und einem Nietschaft (3, 13 ,16), mit einem eine äußere Konturlinie aufweisenden Querschnitt senkrecht zu seiner Längserstreckung, **dadurch gekennzeichnet, dass** die äußere Konturlinie eine Bauchigkeit ergebende Abflachung (10, 10', 10") aufweist, ohne Wendepunkt in der Konturlinie.

2. Niet nach Anspruch 1, **dadurch gekennzeichnet, dass** der Nietschaft (3, 13,16) im Querschnitt drei oder mehr Bäuche aufweist.

3. Niet nach einem der Ansprüche 1 oder 2, **dadurch gekennzeichnet, dass** der Nietschaft (3, 13, 16) als Hohlschaft ausgebildet ist.

4. Niet nach Anspruch 3, **dadurch gekennzeichnet, dass** der Hohlschaft eine unrunde Innenkontur aufweist.

5. Niet nach Anspruch 4, **dadurch gekennzeichnet, dass** der Hohlschaft hinsichtlich seines Querschnitts eine Innenkontur aufweist, die ohne Wendepunkt in der Konturlinie eine Bauchigkeit ergebende Abflachungen aufweist.

6. Niet nach einem der vorhergehenden Ansprüche, **dadurch gekennzeichnet, dass** der Nietschaft (3, 13, 16) an seinem stirnseitigen, dem Nietkopf abgewandten Ende eine in Längsrichtung profilierte Kontur aufweist.

7. Niet nach Anspruch 6, **dadurch gekennzeichnet, dass** die Profilierung wellenartig ausgebildet ist.

8. Niet nach Anspruch 6, **dadurch gekennzeichnet, dass** das stirnseitige, dem Nietkopf (2) abgewandte Ende konkav gebildet ist.

## Claims

1. Rivet (1, 1', 1") preferably produced in a rolling process comprising a rivet head (2) and a rivet shank (3, 13, 16) with a cross-section comprising an outer contour line perpendicular to its longitudinal extent, **characterised in that** the outer contour line comprises a flattening (10, 10', 10") forming a convex bulge, without any inflection points in the contour line.

2. Rivet according to claim 1, **characterised in that** the cross-section of the rivet shank (3, 13, 16) comprises three or more convex bulges.

3. Rivet according to either claim 1 or claim 2, **characterised in that** the rivet shank (3, 13, 16) is configured as a hollow shank.

4. Rivet according to claim 3, **characterised in that** the hollow shank comprises a non-circular inner contour.

5. Rivet according to claim 4, **characterised in that** in cross-section the hollow shank comprises an inner contour which comprises flattenings forming a convex bulge without any inflection points in the contour line.

6. Rivet according to any one of the preceding claims, **characterised in that** at its end-face end remote from the rivet head the rivet shank (3, 13, 16) comprises a contour profiled in the longitudinal direction.

7. Rivet according to claim 6, **characterised in that** the profiling is configured so as to be wave-shaped.

8. Rivet according to claim 6, **characterised in that** the end-face end remote from the rivet head (2) is configured so as to be concave.

## Revendications

1. Rivet (1, 1', 1'') fabriqué de préférence par laminage avec une tête de rivet (2) et un corps de rivet (3, 13, 16), avec une section transversale, présentant une ligne de contour extérieure, perpendiculaire à son extension longitudinale, **caractérisé en ce que** la ligne de contour extérieure présente un méplat (10, 10', 10'') formant un renflement, sans point d'inflexion dans la ligne de contour.

2. Rivet selon la revendication 1, **caractérisé en ce que** le corps de rivet (3, 13, 16) présente trois renflements ou plus dans la section transversale.

3. Rivet selon l'une quelconque des revendications 1 ou 2, **caractérisé en ce que** le corps de rivet (3, 13, 16) est réalisé sous forme de corps creux.

4. Rivet selon la revendication 3, **caractérisé en ce que** le corps creux présente un contour intérieur non circulaire.

5. Rivet selon la revendication 4, **caractérisé en ce que** le corps creux présente en ce qui concerne sa section transversale, un contour intérieur qui présente un méplat formant un renflement sans point d'inflexion dans la ligne de contour.

6. Rivet selon l'une quelconque des revendications précédentes, **caractérisé en ce que** le corps de rivet (3, 13, 16) présente au niveau de son extrémité frontale, opposée à la tête de rivet, un contour profilé dans le sens longitudinal.

7. Rivet selon la revendication 6, **caractérisé en ce que** le profilage est réalisé de manière ondulée.

8. Rivet selon la revendication 6, **caractérisé en ce que** l'extrémité frontale, opposée à la tête de rivet (2), est réalisée de manière concave.
